# EUROPÄISCHE PATENTSCHRIFT

(11) **EP 3 685 950 B1**
(45) Veröffentlichungstag und Bekanntmachung des Hinweises auf die Patenterteilung: **26.06.2024**
(21) Anmeldenummer: 19152986.6
(22) Anmeldetag: 22.01.2019
(51) Int. Cl.: B23K 11/00, B23K 11/11, B23K 11/31

(54) **SCHWEISSEINRICHTUNG ZUM WIDERSTANDSSCHWEISSEN MIT EINER NACHFÜHREINRICHTUNG FÜR EIN NACHFÜHREN EINER SCHWEISSELEKTRODE**
WELDING DEVICE FOR RESISTANCE WELDING INCLUDING A TRACKING DEVICE FOR TRACKING A WELDING ELECTRODE
DISPOSITIF DE SOUDAGE À RESISTANCE AVEC DISPOSITIF DE TRAÇAGE POUR UN TRAÇAGE D'UNE ÉLECTRODE DE SOUDAGE

(43) Veröffentlichungstag der Anmeldung: 29.07.2020
(73) Patentinhaber: DALEX-Schweißmaschinen GmbH & Co. KG, 57537 Wissen/Sieg (DE)
(72) Erfinder: Groß, Marcel, 57518 Betzdorf (DE)
(74) Vertreter: 2s-ip Schramm Schneider Bertagnoll Patent- und Rechtsanwälte Part mbB

(56) Entgegenhaltungen:
- EP-A1- 1 346 792
- DE-A1- 4 322 496
- US-A- 2 293 393
- US-A- 2 299 543
- US-A- 2 421 021

## Beschreibung

Die Erfindung betrifft Schweißeinrichtung zum Widerstandsschweißen, insbesondere Widerstandsbuckelschweißen, mit einer Nachführeinrichtung.

Nachführeinrichtungen für ein Nachführen einer Schweißelektrode einer Schweißeinrichtung sowie Schweißeinrichtungen, die mit einer solchen Nachführeinrichtung ausgerüstet sind, sind aus dem Stand der Technik an sich bekannt, wie beispielsweise aus der EP1346792, welche die Basis für den Oberbegriff des Anspruchs 1 darstellt.

So offenbart beispielsweise die EP 3 153 272 A1 eine Schweißeinrichtung, mit einem kraftgesteuerten, magnetischen Linearantrieb, wobei die Besonderheit dieser Ausgestaltung darin besteht, dass dieser Linearantrieb als ausschließlicher Linearantrieb im bestimmungsgemäßen Verwendungsfall eine Verfahrbewegung, eine Kraftbeaufschlagung sowie ein Nachsetzen gleichermaßen bewirkt.

Gemäß anderer aus dem Stand der Technik bekannter Konzepte ist eine antriebstechnische Zweiteilung vorgesehen, wobei zwischen einem Verfahren der Schweißelektrode samt Kraftbeaufschlagung einerseits und einem Nachsetzen der Schweißelektrode andererseits unterschieden wird. So ist beispielsweise aus der DE 10 2011 113 403 B3 eine Nachführeinrichtung für einen Elektrodenhalter bekannt geworden, der über einen Linearantrieb in Form mehrerer Pneumatikzylinder verfügt. Dabei besteht die Besonderheit dieser vorbekannten Nachführeinrichtung darin, dass zwei in Bewegungsrichtung hintereinander geschaltete Pneumatikzylinder vorgesehen sind. Im bestimmungsgemäßen Verwendungsfall fährt der erste Pneumatikzylinder aus und drückt damit die Schweißelektrode mit einer ersten Druckkraft gegen die zu verschweißenden Werkstücke. Sobald es zu einer Bestromung der Elektrode kommt, wird der zweite Pneumatikzylinder druckbeaufschlagt, was zu einer Druckbeaufschlagung mit einer zweiten Druckkraft führt. Gemäß dieser vorgeschlagenen Nachführeinrichtung wird also antriebstechnisch unterschieden zwischen der Zustellbewegung und einem Nachrücken der Schweißelektrode bei zunehmendem Abschmelzen des Schweißbuckels.

Ganz allgemein erfolgt beim Widerstandsschweißen und so auch beim Widerstandsbuckelschweißen das Verbinden zweier Bauteile durch mittels Strom erzeugte Wärme einerseits bei gleichzeitiger Kraftbeaufschlagung durch Druckerzeugung andererseits. Dabei entsteht die Schweißwärme in Abhängigkeit des angelegten Schweißstroms, des Widerstands an den Berührungsstellen sowie des durch die Bauteile bereitgestellten ohmschen Widerstands. Die Besonderheit des Buckelschweißens besteht darin, dass der Schweißstrom auf einige, durch vorgeformte Berührungsstellen, die sogenannten Buckel, vorgegebene Stromübergänge konzentriert wird, an denen die Erwärmung und die Schweißung stattfinden. Derartige Buckel können beispielsweise Rundbuckel, Langbuckel oder Ringbuckel sein.

Schweißeinrichtungen zum Widerstandsbuckelschweißen verfügen zwecks Kraftbeaufschlagung der miteinander zu verschweißenden Bauteile über wenigstens einen linear verfahrbaren Elektrodenhalter. Im Schweißfall fährt der Elektrodenhalter die von ihm getragene Schweißelektrode an die Schweißstelle heran, erzeugt die für die Schweißung erforderliche Kraftbeaufschlagung und setzt nach einem bestimmungsgemäßen Abschmelzen des Buckels nach. Um ein solches Verfahren des Elektrodenhalters realisieren zu können, sind aus dem Stand der Technik unterschiedliche Antriebskonzepte bekannt geworden, so z. B. aus den schon eingangs genannten EP 3 153 272 A1 und DE 10 2011 113 403 B3.

Ein grundlegendes Problem beim Widerstandsbuckelschweißen besteht darin, dass einerseits eine hinreichende Kraftbeaufschlagung zu besorgen und andererseits eine exakte Nachführung zu gewährleisten sind. Ist beispielsweise die Kraftbeaufschlagung zu Beginn eines Schweißvorgangs zu hoch, so kommt es zu einem Ein- oder Plattdrücken des Schweißbuckels, was zu einer unter Umständen unvollständigen Schweißung führt. Andererseits muss im Falle eines bestimmungsgemäßen Abschmelzens des Schweißbuckels unter entsprechender Kraftbeaufschlagung ein möglichst zeitunverzögertes Nachsetzen, d.h. Nachführen der Schweißelektrode sichergestellt werden, weil es ansonsten zu ungewollten Schweißspritzungen oder gar Fehlschweißungen kommt.

Obgleich sich die aus dem Stand der Technik vorbekannten Antriebskonzepte für das Zustellen und/oder Nachführen von Schweißelektroden im alltäglichen Praxiseinsatz bewährt haben, besteht Verbesserungsbedarf. Es ist insbesondere angestrebt, bei gleichzeitig vereinfachter Konstruktion ein hinsichtlich insbesondere der Ansprechzeit verbessertes Nachsetzen, d.h. Nachführen der Schweißelektrode zu ermöglichen. Es ist deshalb ausgehend vom Vorbeschriebenen die **Aufgabe** der Erfindung, eine Nachführeinrichtung für ein Nachführen einer Schweißelektrode vorzuschlagen, die konstruktiv einfach aufgebaut ist und ein noch weiter optimiertes Ansprechverhalten ermöglicht.

Zur **Lösung** dieser Aufgabe wird mit der Erfindung eine Schweißeinrichtung mit einer Nachführeinrichtung gemäß Anspruch 1 vorgeschlagen.

Die erfindungsgemäße Nachführeinrichtung verfügt über einen pneumatischen Antrieb zum Nachführen einer Schweißelektrode. Dabei kommt als pneumatisches Antriebselement ein Balgzylinder zum Einsatz. Im bestimmungsgemäßen Verwendungsfall dient dieser Balgzylinder dazu, ein Nachführen der Schweißelektrode zu besorgen. Damit kommt in Abkehr zum Stand der Technik beispielsweise nach der DE 10 2011 113 403 B3 als pneumatischer Antrieb nicht ein Kolben-Pneumatikzylinder, sondern ein kolbenloser Zylinder, nämlich ein Balgzylinder zum Einsatz.

Die erfindungsgemäße Nachführeinrichtung verfügt über ein Gehäuse. Dieses Gehäuse nimmt einen Stempel zumindest teilweise auf und beherbergt diesen. Der Stempel ist linear verfahrbar ausgebildet, wobei er bewegungsgelagert ist. Es ist eine möglichst reibungsarme Lagerung bevorzugt, weshalb eine Wälzlagerung bevorzugt ist. Aber auch eine Gleitlagerung oder vergleichbares ist möglich.

Einendseitig des Stempels ist ein Elektrodenhalter am Stempel angebracht, der der auswechselbaren Anordnung einer Schweißelektrode dient. Anderendseitig wirkt der Stempel mit dem Balgzylinder zusammen. Ein Hub des Balgzylinders führt mithin zu einer Verfahrbewegung des Stempels, was wiederum zu einem linearen Verfahren einer unter Zwischenschaltung des Elektrodenhalters am Stempel angeordneten Schweißelektrode führt.

Im Verfahrfall stützt sich der Balgzylinder an einem Widerlager ab, das vom Gehäuse bereitgestellt ist. Der linear verfahrbare Stempel stützt sich mithin unter Zwischenordnung des Balgzylinders am vom Gehäuse bereitgestellten Widerlager ab.

Im bestimmungsgemäßen Verwendungsfall erfolgt die Bewegung des Stempels im Moment des Schweißens ausschließlich aus der Expansion des Balgzylinders. Eine Nachführung der Schweißelektrode wird mithin durch den Hub des Balgzylinders bewirkt. Dabei ist es für ein bestimmungsgemäßes Nachführen ausreichend, wenn der Balgzylinder nur einen minimalen Hub vollführt, beispielsweise von ca. 5 mm, vorzugsweise kleiner 5mm. Die Zustell- und Rückhubbewegung wird von einem im Weiteren noch näher beschriebenen Linearantrieb übernommen.

Der Balgzylinder arbeitet in vorteilhafter Weise nahezu reibungsfrei. Es sind anders als bei den aus der DE 10 2011 113 403 B3 vorbekannten Kolben-Pneumatikzylindern keine Kolben und Kolbenstangen vorgesehen, wodurch in vorteilhafter Weise die bewegte Masse reduziert ist, was die Dynamik beim Nachführen erhöht und mithin die Zeitverzögerung im Ansprechverhalten minimiert. Im Ergebnis ist die erfindungsgemäße Ausgestaltung reaktionsschneller, womit es insbesondere gestattet ist, mit Abschmelzbeginn eines Buckels schneller nachzuführen, womit die Gefahr der Entstehung unerwünschter Schweißspritzer noch weiter minimiert ist.

Mangels Zylinder und davon aufgenommenem Kolben ist die erfindungsgemäße Ausgestaltung im Unterschied zu einem Antriebskonzept mit Kolben-Pneumatikzylinder dem Grunde nach reibungsfrei und damit verschleißarm. Auch bedarf es keiner Luftkammer für einen Rückhub der Schweißelektrode, welche vor Beginn eines Schweißvorgangs zu entlüften ist. Damit ist eine insgesamt vereinfachte Durchführung eines Schweißvorgangs erreicht.

Im bestimmungsgemäßen Verwendungsfall erfolgt eine Zustellung der die Schweißelektrode bereitstellenden Nachführeinrichtung mittels eines dafür vorgesehenen Linearantriebs. Dieser verfährt die Nachführeinrichtung bevorzugter Weise weg- und/oder kraftgesteuert, wobei es nach einem Aufsetzen der Schweißelektrode auf ein zu verschweißendes Bauteil zu einem Zusammendrücken des Balgzylinders kommt. Sobald die durch den Linearantrieb bewirkte Zustellbewegung beendet ist, kann der Schweißvorgang beginnen. Im Moment des Teigigwerdens des Schweißbuckels erfolgt ein Nachführen der Schweißelektrode infolge einer Expansion des Balgzylinders. Da der Hub des Balgzylinders mit zum Beispiel 5 mm oder weniger nur sehr gering ausfällt, ist die Kraftbeaufschlagung des zu verschweißenden Bauteils durch den Balgzylinder über den gesamten Balgzylinderhub bei unverändertem Zylinderdruck zwar nicht konstant, aber nahezu konstant, so dass sich in vorteilhafter Weise reproduzierbare Schweißergebnisse mit konstant guter Qualität erzielen lassen.

Der den Elektrodenhalter tragende Stempel ist vorzugsweise mittels einer Wälzlagerung gelagert, was gegenüber einer Lagerung mit Gleitlagern eine verminderte Reibung sicherstellt. Insbesondere ist die Reibung auch bei einer mit Bezug auf die Schweißzylinderachse exzentrischen Schweißung vergleichsweise gering, so dass eine sichere und verschleißarme Verfahrbewegung des Stempels realisiert ist.

Die mit der erfindungsgemäßen Ausgestaltung vorgeschlagene Konstruktion erweist sich im Aufbau als äußerst einfach. Es sind als Baukomponenten ein Gehäuse, ein Balgzylinder und ein Stempel vorgesehen, wobei sich im endmontierten Zustand der Stempel unter Zwischenwirkung des Balgzylinders am Gehäuse abstützt. Zur geführten Lagerung des Stempels ist eine Wälzlager-Anordnung vorgesehen, die vom Gehäuse getragen ist. Im Ergebnis dieser im Aufbau einfachen Konstruktion steht in vorteilhafter Weise eine preisgünstige Herstellung und auch die vereinfachte Möglichkeit der Montage bzw. Demontage im Reparatur- und/oder Wartungsfall.

Insgesamt wird mit der erfindungsgemäßen Ausgestaltung eine Nachführeinrichtung vorgeschlagen, die konstruktiv einfach ausgeführt ist, gleichwohl aber ein zeitoptimiertes Ansprechverhalten im Falle des Nachführens sicherstellt. Dies insbesondere auch deshalb, weil die Konstruktion dem Grunde nach reibungsfrei ist und die im Bewegungsfall zu bewegende Masse auf ein Minimum reduziert ist.

Es ist gemäß einem weiteren Merkmal der Erfindung vorgesehen, dass der Balgzylinder mit einem Druckregelventil ausgerüstet ist. Dieses Ventil dient dazu, den im Balgzylinder herrschenden Druck wunschgemäß einzustellen bzw. zu regeln. Dabei ist es gemäß der Erfindung bevorzugt, den im Balgzylinder herrschenden Druck in Abhängigkeit der zu erzielenden Schweißkraft auf einen konstanten Wert voreinzustellen. So kann beispielsweise vor Beginn eines Schweißvorgangs der Balgzylinderdruck auf einen Wert zwischen 1 bar und 8 bar, insbesondere auf einen Wert zwischen 2 bar und 7 bar voreingestellt werden. Während des anschließenden Schweißvorgangs wird dieser voreingestellte Druck konstant gehalten.

Der Balgzylinderdruck kann vor Beginn einer jeden Schweißung voreingestellt werden oder alternativ vor Beginn eines Schweißzyklus, der mehrere aufeinander nachfolgende Schweißungen umfasst. Entscheidend ist, dass der im Balgzylinder herrschende Druck nicht während der Durchführung einer Schweißung nachgeregelt wird.

Es ist gemäß der Erfindung vorgesehen, dass die Schweißkraft in Abhängigkeit des vorgebbaren Drucks des Balgzylinders und des Balgzylinderhubs einstellbar ist.

Zu Beginn einer Schweißung wird die Nachführeinrichtung mittels des dafür vorgesehenen Linearantriebs zugestellt. Dabei kommt es nach einem Aufsetzen der Schweißelektrode auf dem zu verschweißenden Bauteil zu einem Zusammendrücken des Balgzylinders. Dieses Zusammendrücken ermöglicht es dem Balgzylinder, in einem darauffolgenden Schweißvorgang einen Hub auszuführen. Damit ergibt sich die auf das zu verschweißende Bauteil einwirkende Kraft aus dem voreingestellten Balgzylinderdruck und der Zusammendrückung des Balgzylinders aus der Positionierung des Linearantriebs vor dem Schweißvorgang.

Es ist gemäß einem weiteren Merkmal der Erfindung vorgesehen, dass das Gehäuse zwei Seitenwände aufweist, die innenseitig jeweils ein Wälzlager zur verfahrbaren Anordnung des Stempels tragen. Der Stempel stützt sich mithin unter Zwischenordnung entsprechender Wälzlager an den Seitenwänden des Gehäuses ab, wobei sich im Verfahrfall eine Bewegung des Stempels in Längsrichtung der Seitenwände ergibt.

Das Gehäuse verfügt gemäß der Erfindung über eine Deckplatte, die die beiden Seitenwände miteinander verbindet. Dabei dient die Deckplatte als Widerlager für den Balgzylinder. Im endmontierten Zustand ist der Balgzylinder zwischen Stempel einerseits und Deckplatte des Gehäuses andererseits angeordnet.

Die Nachführeinrichtung ist Teil einer erfindungsgemäßen Schweißeinrichtung zum Widerstandsschweißen, insbesondere Widerstandsbuckelschweißen, mit zwei Elektrodenhaltern, die jeweils der Aufnahme einer mit einem elektrischen Schweißstrom beaufschlagbaren Schweißelektrode dienen, wobei einer der beiden Elektrodenhalter linear verfahrbar ausgebildet ist und unter Kraftbeaufschlagung von zwischen den Schweißelektroden angeordneten und miteinander zu verschweißenden Bauteilen mit einer in Schließrichtung wirkenden Kraft beaufschlagt ist, wobei die Nachführeinrichtung zwecks Zustellung mittels eines Linearantriebes linear verfahrbar ist. Die Schweißeinrichtung nach der Erfindung verfügt über einen Linearantrieb. Des

Weiteren liegt die Nachführeinrichtung der erfindungsgemäßen Art als separate Baueinheit vor. Diese wird im bestimmungsgemäßen Verwendungsfall vom Linearantrieb translatorisch verfahren, und zwar in Richtung auf die miteinander zu verschweißenden Bauteile bzw. in umgekehrter Richtung. Demnach findet vor Beginn einer Schweißung eine Zustellbewegung der die Schweißelektrode bereitstellenden Nachführeinrichtung durch den Linearantrieb statt. Eine dann während einer Schweißung erfolgende Nachführung der Schweißelektrode wird allein durch die Nachführeinrichtung, das heißt durch den von der Nachführeinrichtung bereitgestellten Balgzylinder, und nicht durch den Linearantrieb bewirkt. Insofern ist im Unterschied beispielsweise zur vorgenannten EP 3 152 272 A1 nicht ein Linearantrieb sowohl für die Zustellung als auch für die Nachführung vorgesehen, sondern ein erster Linearantrieb, der für die lineare Zustellung der Nachführeinrichtung Sorge trägt und ein zweiter Linearantrieb in Ausgestaltung des Balgzylinders, der als pneumatisch arbeitender Antrieb ein lineares Verfahren des die Schweißelektrode tragenden Stempels zum Zwecke der Nachführung bewirkt.

Dabei handelt es sich gemäß der Erfindung bei dem Linearantrieb um einen Spindelantrieb. Dieser verfügt in an sich bekannter Weise über einen Elektromotor einerseits und eine davon angetriebene Spindel andererseits. Von Vorteil dieser Konstruktion ist insbesondere die Robustheit bei gleichzeitiger Zuverlässigkeit. Darüber hinaus ist über den Elektromotor in einfacher Weise eine Weg- und/oder Kraftsteuerung des Linearantriebs in einfacher Weise realisierbar.

Weitere Merkmale und Vorteile der Erfindung ergeben sich aus der nachfolgenden Beschreibung anhand der Figuren. Dabei zeigen
- Fig. 1: in schematisch perspektivischer Darstellung einen Linearantrieb mit einer Nachführeinrichtung nach der Erfindung;
- Fig. 2: in schematischer Perspektivdarstellung den Linearantrieb nach Fig. 1;
- Fig. 3: in schematischer Perspektivdarstellung die erfindungsgemäße Nachführeinrichtung nach Fig. 1;
- Fig. 4: in schematischer Perspektivdarstellung die erfindungsgemäße Nachführeinrichtung nach Fig. 3 ohne Gehäuse;
- Fig. 5: ein Diagramm mit beispielhaften Druckkurven und
- Fig. 6: in rein schematischer Darstellung eine erfindungsgemäße Schweißeinrichtung.

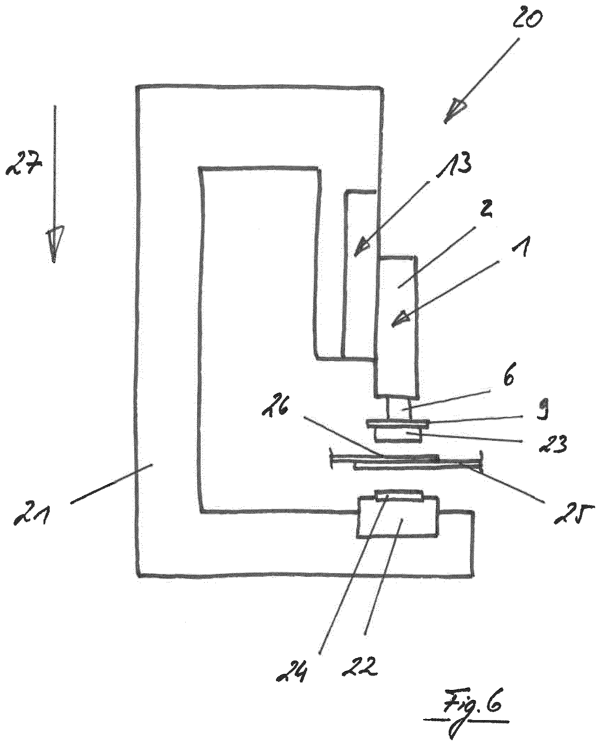

Wie die schematische Darstellung nach Fig. 6 erkennen lässt, verfügt die erfindungsgemäße Schweißeinrichtung 20 über einen Grundkörper 21, der im gezeigten Ausführungsbeispiel C-förmig ausgebildet ist. Die Schweißeinrichtung 20 verfügt über einen ersten Elektrodenhalter 9 sowie über einen zweiten Elektrodenhalter 22, wobei die Elektrodenhalter 9 und 22 jeweils der auswechselbaren Anordnung einer mit einem elektrischen Schweißstrom beaufschlagbaren Schweißelektrode 23 bzw. 24 dienen. Zum Zwecke der Schweißstrombeaufschlagung sind die Schweißelektroden 23 und 24 in an sich bekannter Weise mittels in den Zeichnungen nicht gesondert dargestellter Stromleitungen an einen Transformator angeschlossen.

Der Elektrodenhalter 22 ist im gezeigten Ausführungsbeispiel ortsfest am Grundkörper 21 montiert. Der Elektrodenhalter 9 ist indes linear verfahrbar zum Grundkörper 2 ausgebildet, zu welchem Zweck der Elektrodenhalter 9 an einen Linearantrieb 13 angeschlossen ist, und zwar unter Zwischenschaltung einer Nachführeinrichtung 1.

Im bestimmungsgemäßen Verwendungsfall der Schweißung wird der Elektrodenhalter 9 samt davon getragener Schweißelektrode 23 in Schließrichtung 27, das heißt in Richtung auf die ortsfeste Schweißelektrode 22 bewegt, so dass es zu einem Verschweißen der beiden zwischen den Schweißelektroden 23 und 24 angeordneten Bauteile 25 und 26 kommen kann.

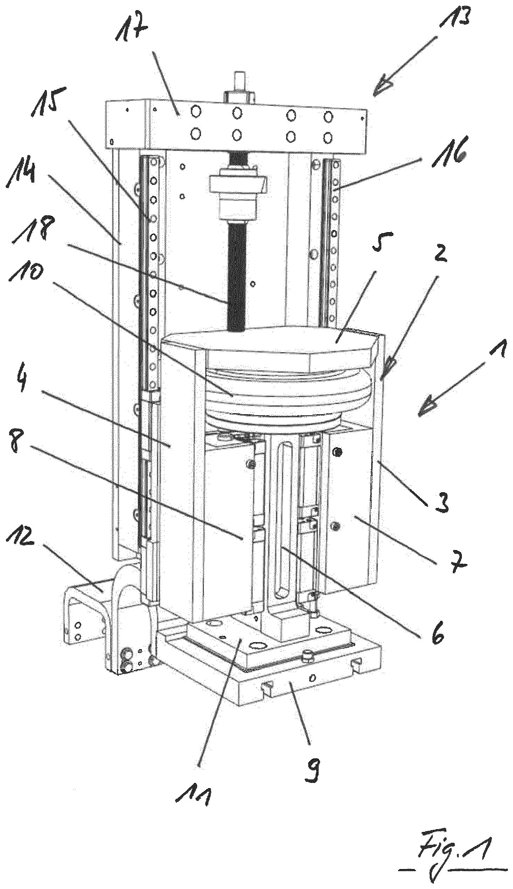

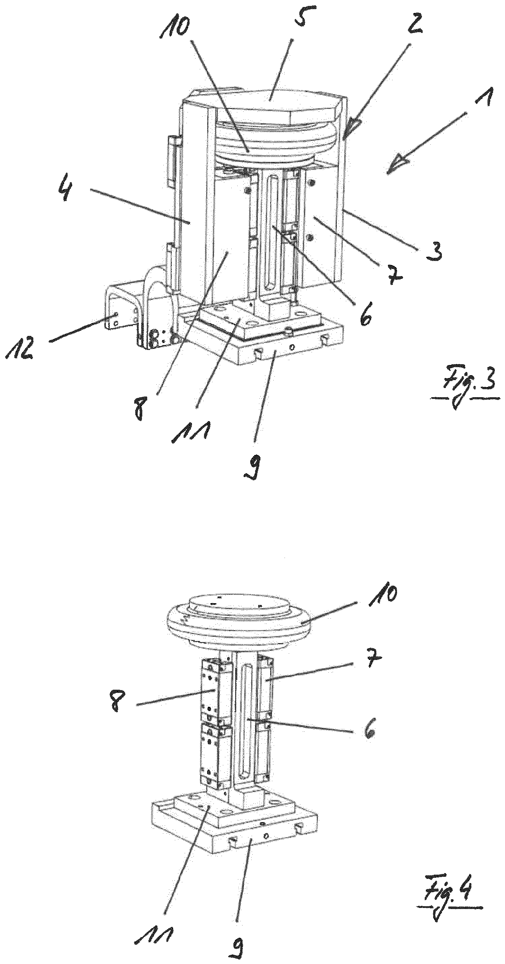

Der Linearantrieb 13 und die Nachführeinrichtung 1 sind im Detail in den Figuren 1 bis 4 dargestellt. Aus einer Zusammenschau dieser Figuren ergibt sich wie folgt.

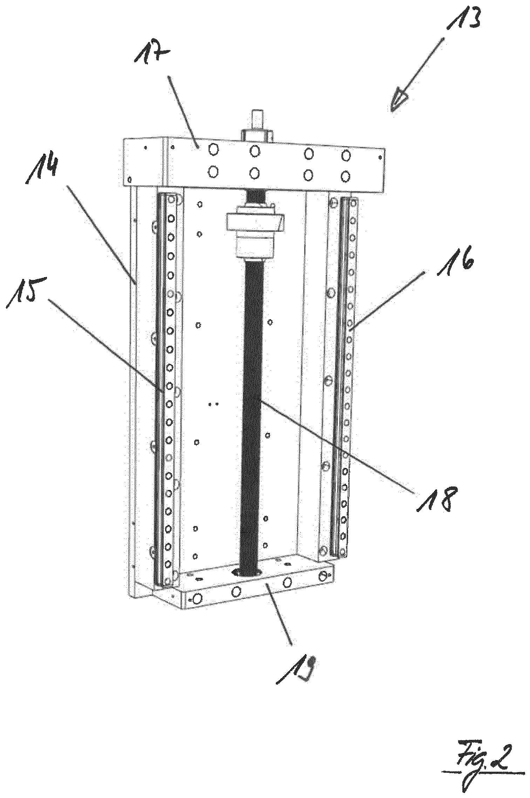

Der Linearantrieb 13 verfügt über eine Grundplatte 14. Diese trägt jeweils randseitig in Höhenrichtung verlaufende Führungen 15 und 16, und zwar mit Bezug auf die Zeichnungsebene nach Fig. 2 eine linke Führung 15 und eine rechte Führung 16. Mittig zwischen den beiden Führungen 15 und 16 ist eine Spindel 18 angeordnet, die im bestimmungsgemäßen Verwendungsfall von einem in den Figuren nicht dargestellten Elektromotor angetrieben ist. Dieser Motor kann beispielsweise an einer an der Grundplatte 14 angeordneten Traverse 17 befestigt sein. Desweitern ist eine unterer Traverse 19 vorgesehen, wobei die beiden Traversen 17 und 19 jeweils Lager zur verdrehbaren Anordnung der Spindel 18 bereitstellen.

Wie insbesondere die Darstellung nach Fig. 1 erkennen lässt, dient der Linearantrieb 13 dem linearen Verfahren einer Nachführeinrichtung 1, die als zum Linearantrieb 13 separate Baukomponente ausgebildet ist.

Die Nachführeinrichtung 1 verfügt über ein Gehäuse 2. Dieses weist im dargestellten Ausführungsbeispiel zwei Seitenwände 3 und 4 sowie eine die beiden Seitenwände 3 und 4 miteinander oberseitig verbindende Deckplatte 5 auf. Innenseitig des Gehäuses 2 sind an den Seitenwänden 3 und 4 Wälzlager 7 und 8 angeordnet, die der linearen Führung eines vom Gehäuse 2 beherbergten Stempels 6 dienen. Mit Bezug auf die Höhenrichtung nach den Figuren 1, 3 und 4 ist zwischen dem oberen Ende des Stempels 6 und der Deckplatte 5 des Gehäuses 2 ein Balgzylinder 10 angeordnet. Dieser stützt sich an der als Widerlager dienenden Deckplatte 5 des Gehäuses 2 ab und wirkt im Betriebsfall auf den Stempel 6 ein, was eine lineare Verfahrbewegung des Stempels 6 bewirkt.

Dem Balgzylinder 10 gegenüberliegend ist am Stempel 6 unter Zwischenordnung einer Verbindungsplatte 11 der Elektrodenhalter 9 angeordnet, der im gezeigten Ausführungsbeispiel als Spanplatte ausgebildet ist. Zwecks Stromversorgung einer vom Elektrodenhalter 9 gehaltenen Schweißelektrode 23 ist der Elektrodenhalter 9 an eine Schweißstromanbindung 12 angeschlossen, wie sich dies insbesondere aus der Darstellung nach Fig. 1 ergibt.

Die Funktionsweise der erfindungsgemäßen Schweißvorrichtung 20 bzw. der erfindungsgemäßen Nachführeinrichtung 1 ergibt sich wie folgt.

Nach einem Positionieren der miteinander zu verschweißenden Bauteile 25 und 26 zwischen den beiden Schweißelektroden 23 und 24 erfolgt mittels des Linearantriebs 13 eine Verfahrbewegung der die Schweißelektrode 23 bereitstellenden Nachführeinrichtung 1 in Schließrichtung 27 (vgl. Fig. 6). Infolge dessen kommen die Schweißelektroden 23 und 24 in bestimmungsgemäßen Kontakt mit den miteinander zu verschweißenden Bauteilen 25 und 26. Diese Verfahrbewegung wird weg- und/oder kraftgesteuert durchgeführt. Dabei kommt es infolge einer Verfahrbewegung nach einem Aufsetzen der Schweißelektrode 23 auf die zu verschweißenden Bauteile 25 und 26 zu einem Zusammendrücken des von der Nachführeinrichtung 1 bereitgestellten Balgzylinders 10. Dieser wird ausgehend von seiner Ausgangshöhe H₀ auf die sich einstellende Höhe H um ΔH zusammengedrückt, woraus sich die Schweißkraft bzw. der Arbeitspunkt der Schweißaufgabe ergibt.

Sobald die Zustellbewegung der Nachführeinrichtung 1 unter gleichzeitigem Zusammendrücken des Balgzylinders 10 beendet ist, stoppt der Linearantrieb 13 und ein weiteres Verfahren der Schweißelektrode 23 über den Linearantrieb 13 findet nicht mehr statt. Sobald diese Stellung erreicht ist, beginnt der eigentliche Schweißvorgang. Bei einem Teigigwerden eines von einem der beiden Bauteile 25 und 26 bereitgestellten Buckels kommt es zu einem Nachsetzen der Schweißelektrode 23. Dabei erfolgt ein Nachsetzen bzw. Nachführen der Schweißelektrode 23 ausschließlich durch die Nachführeinrichtung 1, indem der Balgzylinder 10 um einen Hub expandiert, und zwar um den tatsächlichen Hub ΔH', wobei ΔH' kleiner oder gleich ΔH ist. ΔH' ist dabei die tatsächliche Expansion des Balgzylinders während des Schweißvorgangs, die sich aus der ursprünglichen Höhe des abschmelzenden Buckels ergibt.

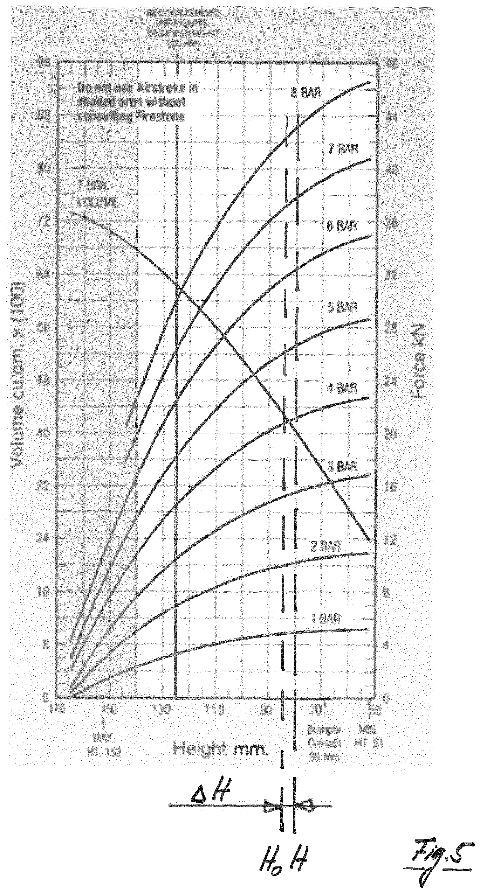

Vor Beginn der Schweißung ist der Balgzylinder 10 druckbeaufschlagt worden und es liegt ein konstanter Druck im Bereich von beispielsweise 1 bar bis 8 bar, beispielsweise von 4 bar, 5 bar oder 6 bar an. In Abhängigkeit dieses voreingestellten Zylinderdrucks und des möglichen Balgzylinderhubs ΔH, ergibt sich die auf die Bauteile 25 und 26 einwirkende Schweißkraft. Dabei sind der zu wählende Zylinderdruck und der vom Balgzylinder zu vollführende Hub ΔH in Abhängigkeit der Schweißaufgabe vorzugeben. Der Zusammenhang zwischen Zylinderdruck, Hub und Schweißkraft ergibt sich aus dem Diagramm nach Fig. 5.

Im Diagramm nach Fig. 5 sind für einen Balgzylinder 10 Druckkurven über den Hub und die sich daraus ergebende Kraft aufgetragen. Wie sich aus diesem Diagramm anhand eines beispielhaft eingetragenen Hubs ΔH von 5 mm ergibt, stellt sich bei einem Zylinderdruck von 2 bar eine Kraft von ca. 10 kN und bei einem Druck von z.B. 6 bar eine Kraft von 32 kN ein. Je nach zu lösender Schweißaufgabe kann mithin zur Erzielung einer bestimmten Schweißkraft der zu verfahrende Hub bei gegebenem Druck oder der Druck bei vorgegebenem Hub entsprechend gewählt werden. Entscheidend ist, dass der Druck im Balgzylinder 10 während eines Schweißvorgangs in Entsprechung des beispielhaft dargestellten Kurvenverlaufs nach Fig. 5 konstant gehalten wird. Damit sind außerordentlich schnelle Ansprechzeiten beim Nachführen gewährleistet, und dies bei gleichzeitig optimierter Krafteinleitung in die Schweißelektroden beim Nachführen.

### Bezugszeichen

- 1: Nachführeinrichtung
- 2: Gehäuse
- 3: Seitenwand
- 4: Seitenwand
- 5: Deckplatte (Widerlager)
- 6: Stempel
- 7: Wälzlager
- 8: Wälzlager
- 9: Elektrodenhalter
- 10: Balgzylinder
- 11: Verbindungsplatte
- 12: Schweißstromanbindung
- 13: Linearantrieb
- 14: Grundplatte
- 15: Führung
- 16: Führung
- 17: Traverse
- 18: Spindel
- 19: Traverse
- 20: Schweißeinrichtung
- 21: Grundkörper
- 22: Elektrodenhalter
- 23: Schweißelektrode
- 24: Schweißelektrode
- 25: Bauteil
- 26: Bauteil
- 27: Schließrichtung

- H₀: Ausgangshöhe
- H: Höhe
- ΔH: Hub
- ΔH': tatsächlicher Hub

## Patentansprüche

1. Schweißeinrichtung zum Widerstandsschweißen, insbesondere Widerstandsbuckelschweißen, mit zwei Elektrodenhaltern (9, 22), die jeweils der Aufnahme einer mit einem elektrischen Schweißstrom beaufschlagbaren Schweißelektrode (23, 24) dienen, wobei einer der beiden Elektrodenhalter (9) linear verfahrbar ausgebildet ist und unter Kraftbeaufschlagung von zwischen den Schweißelektroden (23, 24) angeordneten und miteinander zu verschweißenden Bauteilen (25, 26) mit einer in Schließrichtung (27) wirkenden Kraft beaufschlagbar ist, und mit einer Nachführeinrichtung (1), die mittels eines Linearantriebs (13) linear verfahrbar ausgebildet ist, wobei die Nachführeinrichtung (1) als zum Linearantrieb (13) separate Baukomponente ausgebildet ist und wobei der linear verfahrbar ausgebildete Elektrodenhalter (9) an den Linearantrieb (13) angeschlossen ist, und zwar unter Zwischenschaltung der Nachführeinrichtung (1), **dadurch gekennzeichnet, dass** der Linearantrieb (13) ein Spindelantrieb ist und dass die Nachführeinrichtung (1) über ein Gehäuse (2) verfügt, das zwei Seitenwände (3, 4) sowie eine die beiden Seitenwände (3, 4) miteinander verbindende Deckplatte (5) aufweist, wobei das Gehäuse (2) einen linear verfahrbar angeordneten Stempel (6) beherbergt, der bewegungsgelagert ist und an dem einendseitig der linear verfahrbar ausgebildete Elektrodenhalter (9) zur auswechselbaren Anordnung einer der Schweißelektroden (23, 24) angeordnet ist, und wobei das Gehäuse (2) ferner einen Balgzylinder (10) beherbergt, der anderendseitig des Stempels (6) mit dem Stempel (6) zusammenwirkt und sich gegenüber einem vom Gehäuse (2) bereitgestellten Widerlager (5) abstützt, wobei die Deckplatte (5) als Widerlager für den Balgzylinder (10) dient, und wobei der Druck im Balgzylinder (10) auf einen konstanten Wert voreinstellbar ist und die Schweißkraft in Abhängigkeit des vorgebbaren Drucks im Balgzylinder und des Balgzylinderhubs einstellbar ist, wobei der im Balgzylinder herrschende Druck während der Durchführung einer Schweißung frei von einer Nachregelung ist.

2. Schweißeinrichtung nach Anspruch 1, **dadurch gekennzeichnet, dass** der Balgzylinder (10) mit einem Druckregelventil ausgerüstet ist.

3. Schweißeinrichtung nach Anspruch 1 oder 2, **dadurch gekennzeichnet, dass** das Gehäuse (2) zwei Seitenwände (3, 4) aufweist, die innenseitig jeweils ein Wälzlager (7, 8) zur verfahrbaren Anordnung des Stempels (6) tragen.

4. Schweißeinrichtung nach einem der vorhergehenden Ansprüche, **dadurch gekennzeichnet, dass** der Linearantrieb (13) weg- und/oder kraftsteuerbar ist.

## Claims

1. Welding device for resistance welding, in particular resistance projection welding, having two electrode holders (9, 22) which are each used to receive a welding electrode (23, 24) which can be applied with an electrical welding current, it being possible for one of the two electrode holders (9) to be linearly movable and to be applied with a force acting in the closing direction (27) by applying force to components (25, 26) which are arranged between the welding electrodes (23, 24) and are to be welded to one another, and having a tracking device (1) which is linearly movable by means of a linear drive (13), the tracking device (1) being designed as a structural component which is separate from the linear drive (13), and the linearly movable electrode holder (9) being connected to the linear drive (13) with the tracking device (1) placed between, **characterized in that** the linear drive (13) is a spindle drive, and **in that** the tracking device (1) has a housing (2) which has two side walls (3, 4) and a cover plate (5) connecting the two side walls (3, 4), the housing (2) accommodating a linearly movable stamp (6) which is mounted for movement and on which the linearly movable electrode holder (9) is arranged at one end for interchangeably arranging one of the welding electrodes (23, 24), and the housing (2) further accommodating a bellows cylinder (10) which interacts with the stamp (6) at the other end of the stamp (6) and is supported against an abutment (5) provided by the housing (2), the cover plate (5) being used as the abutment for the bellows cylinder (10), and it being possible for the pressure in the bellows cylinder (10) to be set to a constant value, and it being possible for the welding force to be adjusted depending on the predeterminable pressure in the bellows cylinder and on the bellows cylinder stroke, the pressure prevailing in the bellows cylinder being free of readjustment while welding is being carried out.

2. Welding device according to claim 1, **characterized in that** the bellows cylinder (10) is equipped with a pressure control valve.

3. Welding device according to either claim 1 or claim 2,
**characterized in that** the housing (2) has two side walls (3, 4) which each carry a rolling bearing (7, 8) on the inside for the movable arrangement of the stamp (6).

4. Welding device according to any of the preceding claims,
**characterized in that** the linear drive (13) can be distance-controlled and/or force-controlled.

## Revendications

1. Dispositif de soudage permettant le soudage par résistance, en particulier le soudage par résistance par bossage, comportant deux porte-électrodes (9, 22) servant respectivement à recevoir une électrode de soudage (23, 24) pouvant être alimentée en courant de soudage électrique, dans lequel l'un des deux porte-électrodes (9) est conçu de manière à pouvoir se déplacer linéairement et peut être soumis à une force agissant dans le sens de fermeture (27) sous l'action d'une force de pièces (25, 26) disposées entre les électrodes de soudage (23, 24) et devant être soudées l'une à l'autre, et comportant un dispositif de suivi (1) qui est conçu de manière à pouvoir se déplacer linéairement au moyen d'un entraînement linéaire (13), dans lequel le dispositif de suivi (1) est conçu en tant que composant structural séparé de l'entraînement linéaire (13) et dans lequel le porte-électrode (9) conçu de manière à pouvoir se déplacer linéairement est raccordé à l'entraînement linéaire (13), à savoir avec intercalation du dispositif de suivi (1),
**caractérisé en ce que** l'entraînement linéaire (13) est un entraînement à broche et **en ce que** le dispositif de suivi (1) possède un boîtier (2) qui présente deux parois latérales (3, 4) ainsi qu'une plaque de recouvrement (5) reliant les deux parois latérales (3, 4) l'une à l'autre, dans lequel le boîtier (2) loge un poinçon (6) disposé de manière à pouvoir se déplacer linéairement, lequel poinçon est monté en mouvement et sur lequel poinçon est disposé, du côté d'une extrémité, le porte-électrode (9) conçu de manière à pouvoir se déplacer linéairement pour la disposition interchangeable d'une des électrodes de soudage (23, 24), et dans lequel le boîtier (2) loge en outre un vérin à soufflet (10) qui coopère, du côté de l'autre extrémité du poinçon (6), avec le poinçon (6) et s'appuie contre une butée (5) fournie par le boîtier (2), dans lequel la plaque de recouvrement (5) sert de butée pour le vérin à soufflet (10), et dans lequel la pression dans le vérin à soufflet (10) peut être préréglée à une valeur constante et la force de soudage peut être réglée en fonction de la pression pouvant être prédéfinie dans le vérin à soufflet et de la course du vérin à soufflet, dans lequel la pression régnant dans le vérin à soufflet est exempte de post-régulation pendant la réalisation d'une soudure.

2. Dispositif de soudage selon la revendication 1, **caractérisé en ce que** le vérin à soufflet (10) est équipé d'une soupape de régulation de pression.

3. Dispositif de soudage selon la revendication 1 ou 2,
**caractérisé en ce que** le boîtier (2) présente deux parois latérales (3, 4) qui portent, côté intérieur, respectivement un palier à roulement (7, 8) pour la disposition de manière à pouvoir se déplacer du poinçon (6).

4. Dispositif de soudage selon l'une des revendications précédentes,
**caractérisé en ce que** l'entraînement linéaire (13) peut être commandé en trajectoire et/ou en force.
